# EUROPEAN PATENT APPLICATION

(11) **EP 4 538 114 A1**
(43) Date of publication of application: **16.04.2025**
(21) Application number: 22945263.6
(22) Date of filing: 08.06.2022
(51) Int. Cl.: B60Q 1/04, B60Q 1/30, B60R 21/34

(54) **FULL-WIDTH LIGHT ASSEMBLY AND VEHICLE**

(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: DING, Weipeng, Hangzhou, Zhejiang 310051 (CN); ZHANG, Mengfan, Hangzhou, Zhejiang 310051 (CN); GOU, Ligang, Hangzhou, Zhejiang 310051 (CN); ZHENG, Xuan, Hangzhou, Zhejiang 310051 (CN); ZHANG, Jun, Hangzhou, Zhejiang 310051 (CN); LIAO, Huihong, Hangzhou, Zhejiang 310051 (CN)
(74) Representative: Barker Brettell LLP
(86) International application number: PCT/CN2022/097712
(87) International publication number: WO 2023/236118

(57) **Abstract**

The present application relates to the field of vehicle technology, and in particular to a full-width light assembly and a vehicle. The full-width light assembly provided in the present application includes a full-width light support component and a full-width light. The full-width light support component is configured to support the full-width light, and includes a first bracket which is of a sheet-like structure and a second bracket which supports the first bracket. For the full-width light assembly provided in the present application, the first bracket is arranged in a sheet-like structure and covers the full-width light, so that the full-width light can be better supported; meanwhile, the second bracket supports the first bracket, so that the weight of the full-width light carried by the full-width light support component is effectively increased, and the full-width light support component is relatively lighter and thinner, reducing the strength thereof in the horizontal direction, thereby facilitating pedestrian protection. The vehicle provided in the present application includes the above-mentioned full-width light assembly, and therefore also has the technical effects above.

## Description

### TECHNICAL FIELD

The present application relates to the field of vehicle technology, and in particular, to a full-width light assembly and a vehicle.

### BACKGROUND

With the development trend of electrification and intelligentization in the automobile industry, the texture of automotive exterior trim is becoming more and more important in the minds of consumers. As one of the factors reflecting the technological sense of the vehicle's front-end exterior trim, the front full-width light is becoming more and more commonly used in automobiles.

The front full-width light is located between the front grille and the front cover. Compared with traditional decorative strip, the weight of the front full-width light increases, resulting in the following problems: modal reduction, being easy to resonate due to low-frequency excitation from the road surface, knocking noise generated by collision with the grille, and affecting the vibration durability life. There is a gap surface difference with peripheral parts during assembling, which is difficult to control and affects the aesthetics. In order to solve the above problems, a frame-type front bumper bracket is usually added for installation.

However, the frame-style front bumper bracket has bulky structure and high strength, which is not conducive to pedestrian protection; at the same time, it has limited weight-bearing capacity for the full-width light.

### SUMMARY

The full-width light assembly provided by the present application includes a full-width light support component and a full-width light, and the full-width light support component is configured to support the full-width light and to be connected to a frame of a vehicle and a bumper assembly of the vehicle. The full-width light support component includes a first bracket and a second bracket, and both of the first bracket and the second bracket are configured to be connected to the frame of the vehicle, and the second bracket supports the first bracket. The first bracket is of a sheet-like structure, having a first surface and a second surface that are oppositely arranged, and the first surface is configured to cover the full-width light and the second surface is configured to be connected to the bumper assembly.

The technical effects of the present application are as below. The full-width light assembly provided by the present application includes a full-width light support component and a full-width light. The full-width light support component includes a first bracket and a second bracket, and the first bracket is arranged in a sheet-like structure, and a first surface of the first bracket covers the full-width light and thus the full-width light can be better supported. At the same time, the second bracket supports the first bracket, so that the weight of the full-width light carried by the full-width light support component is effectively increased, and the full-width light support component is relatively thinner and lighter, reducing its strength in the horizontal direction, which is beneficial for pedestrian protection.

### BRIEF DESCRIPTION OF DRAWINGS

FIG. 1 is an exploded structural schematic diagram of a full-width light assembly, a frame, a bumper assembly and a lock mounting plate provided by an embodiment of the present application.
FIG. 2 is a structural schematic diagram of a first bracket of a full-width light assembly provided by an embodiment of the present application from a first perspective.
FIG. 3 is a structural schematic diagram of a first bracket of a full-width light assembly provided by an embodiment of the present application from a second perspective.
FIG. 4 is a structural schematic diagram of a second bracket of a full-width light assembly provided by an embodiment of the present application.
FIG. 5 is a structural schematic diagram of a full-width light of a full-width light assembly provided by an embodiment of the present application.
FIG. 6 is a structural schematic diagram of a connecting leg of a full-width light of a full-width light assembly provided by an embodiment of the present application from a first perspective.
FIG. 7 is a structural schematic diagram of a connecting leg of a full-width light of a full-width light assembly provided by an embodiment of the present application from a second perspective.
FIG. 8 is a structural schematic diagram of a connecting leg of a full-width light of a full-width light assembly provided by an embodiment of the present application from a third perspective.
FIG. 9 is a schematic diagram of a connecting structure between a first bracket and a second bracket of a full-width light assembly provided by an embodiment of the present application.
FIG. 10 is a structural schematic diagram of a frame, a lock mounting plate and a second bracket of a vehicle provided by an embodiment of the present application.

### Reference signs:

10. full-width light assembly;
100. full-width light support component;
110. first bracket;
111. opening; 112. weight-reducing hole; 113. bracket leg;
114. slot; 115. fourth mounting hole; 116. fifth mounting hole;
120. second bracket;
121. first connecting portion; 1211. second mounting hole;
122. second connecting portion; 1221. third mounting hole;
123. arc-shaped transition portion; 124. second reinforcing bar;
125. flanging structure;
130. full-width light;
131. connecting leg;
1311. connecting leg portion; 1312. connecting end portion;
1313. first mounting hole; 1314. first reinforcing bar;
1315. groove; 1316. reinforcing rib; 1317. weakening hole;
133. buckle;
210. framework;
211. first installation position; 213. second installation position;
220. bumper assembly; 230. lock mounting plate.

### DESCRIPTION OF EMBODIMENTS

The front full-width light is located between the front grille and the front cover. Compared with traditional decorative strip, the weight of the front full-width light increases, resulting in the following problems: modal reduction, being easy to resonate due to low-frequency excitation from the road surface, knocking noise generated by collision with the grille, and affecting the vibration durability life. There is a gap surface difference with peripheral parts during assembling, which is difficult to control and affects the aesthetics. In order to solve the above problems, a frame-type front bumper bracket is usually added for installation. However, the frame-style front bumper bracket has bulky structure and high strength, which is not conducive to pedestrian protection; at the same time, it has limited weight-bearing capacity for the full-width light.

In view of this, the full-width light assembly provided by an embodiment of the present application includes a full-width light support component and a full-width light. The full-width light support component is configured to support the full-width light and to be connected to a frame of a vehicle and a bumper assembly of the vehicle. The full-width light support component includes a first bracket and a second bracket, and both of the first bracket and the second bracket are configured to be connected to the frame of the vehicle, where the second bracket supports the first bracket. The first bracket is of a sheet-like structure, having a first surface and a second surface that are oppositely provided, and the first surface is configured to cover the full-width light and the second surface is configured to be connected to the bumper assembly. The full-width light assembly provided by the present application includes a full-width light support component and a full-width light. The full-width light support component includes a first bracket and a second bracket, and the first bracket is arranged in a sheet-like structure, and a first surface of the first bracket covers the full-width light, and thus the full-width light can be better supported. At the same time, the second bracket supports the first bracket, so that the weight of the full-width light carried by the full-width light support component is effectively increased, and the full-width light support component is relatively thinner and lighter, reducing its strength in the horizontal direction, which is beneficial for pedestrian protection.

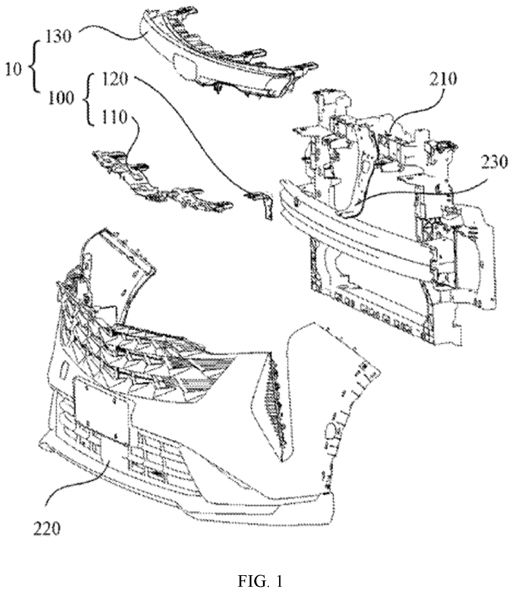

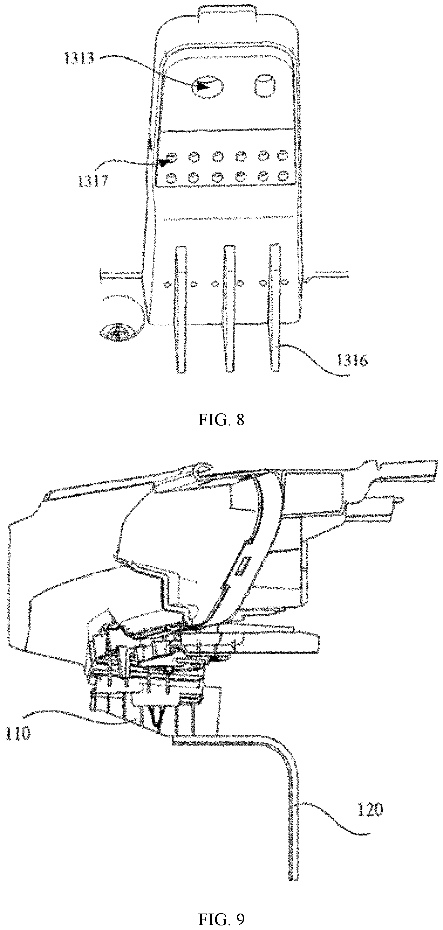

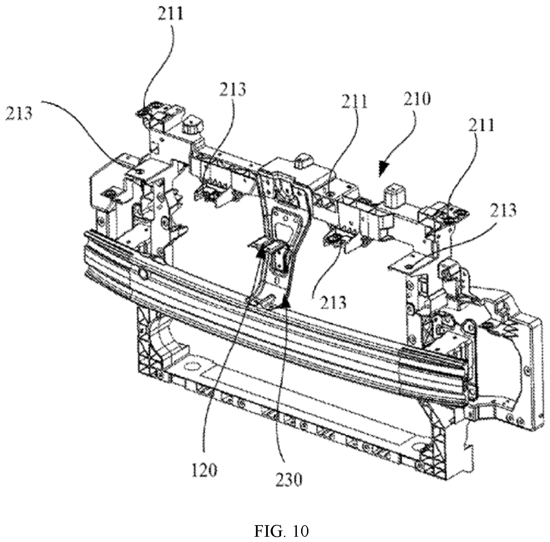

Please refer to FIG. 1, FIG. 9 and FIG. 10, a full-width light assembly 10 provided by an embodiment of the present application includes a full-width light support component 100 and a full-width light 130. The full-width light support component 100 is configured to support the full-width light 130 and to be connected to a frame 210 of a vehicle and a bumper assembly 220 of the vehicle. The full-width light support component 100 includes a first bracket 110 and a second bracket 120, and both of the first bracket 110 and the second bracket 120 are configured to be connected to the frame 210 of the vehicle, and the second bracket 120 supports the first bracket 110. The first bracket 110 is of a sheet-like structure, having a first surface and a second surface that are oppositely provided, and the first surface is configured to cover the full-width light 130 and the second surface is configured to be connected to the bumper assembly 220.

It should be noted that the full-width light assembly 10 provided in the present application may be a front full-width light of a vehicle or a rear full-width light of a vehicle. In other specific embodiments, the full-width light support component 100 in the full-width light assembly 10 also may be configured to support other components.

Exemplarily, in the present embodiment, the full-width light assembly 10 is a front full-width light.

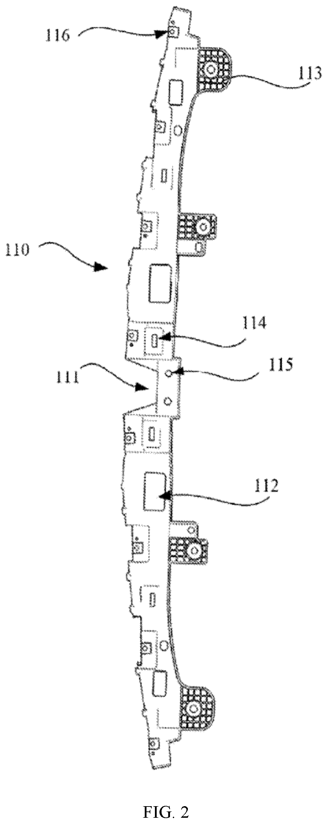

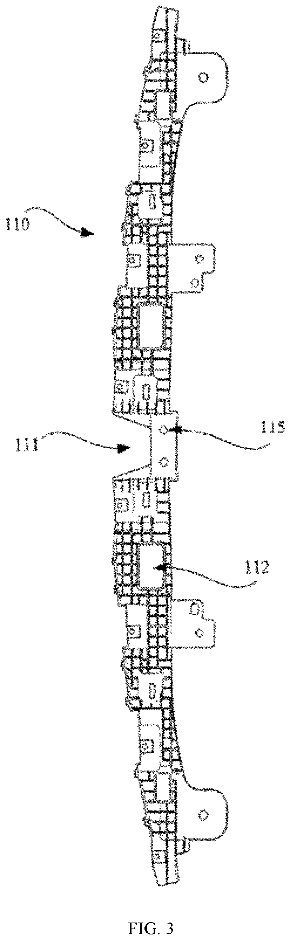

Please refer to FIG. 2 and FIG. 3, in an optional exemplary embodiment, the first bracket 110 is provided with an opening 111, and the opening 111 is arranged at a center position of the first bracket 110.

It should be noted that, specifically, in the present embodiment, the first bracket 110 is provided with an opening 111, and the opening 111 can reduce the strength of the first bracket 110 at the opening 111. If the vehicle accidentally collides with a pedestrian, the first bracket 110 breaks preferentially at the opening 111. Since the strength at the opening 111 is lower, the degree of collision damage to the pedestrian is effectively reduced, which is beneficial to pedestrian protection.

Specifically, it should be noted that in the present embodiment, the opening 111 is arranged at the center position of the first bracket 110. If a collision occurs, it is convenient for the first bracket 110 to break from the center position, so that both sides of the first bracket 110 are subjected to uniform force, which facilitates timely breaking of the first bracket 110 and thus better pedestrian protection.

It can be understood that the specific position of the opening 111 on the first bracket 110 is not limited here. In other specific embodiments, the opening 111 may also be arranged at other positions on the first bracket 110 according to the specific needs of the user.

At the same time, the number of openings 111 is not limited here. In other specific embodiments, the number of openings 111 may be set to two, three, or four according to the specific needs of the user. It should be noted that when the number of openings 111 is set to two, the two openings 111 may be evenly distributed along a length direction of the first bracket 110. When the number of openings 111 is set to three, the three openings 111 may be arranged at equal intervals along the length direction of the first bracket 110. When the number of openings 111 is set to four, the four openings 111 may be arranged at equal intervals along the length direction of the first bracket 110.

Specifically, in the present embodiment, the opening 111 of the first bracket 110 may be a slot-shaped notch arranged on the first bracket 110. It should be noted that the provision of the opening 111 as a slot-shaped notch makes slotting simple and easy to operate, and reduces the difficulty of manufacturing the first bracket 110. At the same time, the slot-shaped notch, when being subjected to a collision, is more likely to break, further achieving the effect of weakening the strength of the first bracket 110 in the horizontal direction. Meanwhile, it is convenient for the first bracket 110 to break at the preset slot-shaped notch when a collision occurs, that is, break at a preset position.

In an optional exemplary embodiment, specifically, the first bracket 110 is provided with a plurality of weight-reducing holes 112.

It should be noted that a plurality of weight-reducing holes 112 are provided in the first bracket 110, which can make the first bracket 110 lighter and thinner, and further is conducive to meeting the lightweight requirements of the entire vehicle and reducing the load of the vehicle, thereby enhancing the endurance of the vehicle.

Specifically, in the present embodiment, the plurality of weight-reducing holes 112 are arranged symmetrically relative to the central axis of the first bracket 110.

It should be noted that the provision of the plurality of weight-reducing holes 112 symmetrically relative to the central axis of the first bracket 110 can make the overall structural mass of the first bracket 110 evenly distribute, thereby ensuring the stability of the overall structure.

Exemplarily, the number of weight-reducing holes 112 is four. With the central axis of the first bracket 110 as the axis of symmetry, each of two sides of the first bracket 110 is provided with two weight-reducing holes 112.

It can be understood that the specific number of weight-reducing holes 112 is not limited here. In other specific embodiments, the number of weight-reducing holes 112 may also be set to two, six or eight, etc., according to the specific needs of the user.

Exemplarily, the weight-reducing hole 112 is in a shape of a rectangular hole. It can be understood that the specific shape of the weight-reducing hole 112 is not limited here. In other specific embodiments, the shape of the weight-reducing hole 112 may also be set to a circle, an ellipse, or a long strip according to the needs of the user.

In an optional exemplary embodiment, the first bracket 110 is provided with a bracket leg 113, and the bracket leg 113 is connected to the frame 210 through bolts.

In an optional exemplary embodiment, the first bracket 110 is provided with a fifth mounting hole 116 for connecting the bumper assembly 220.

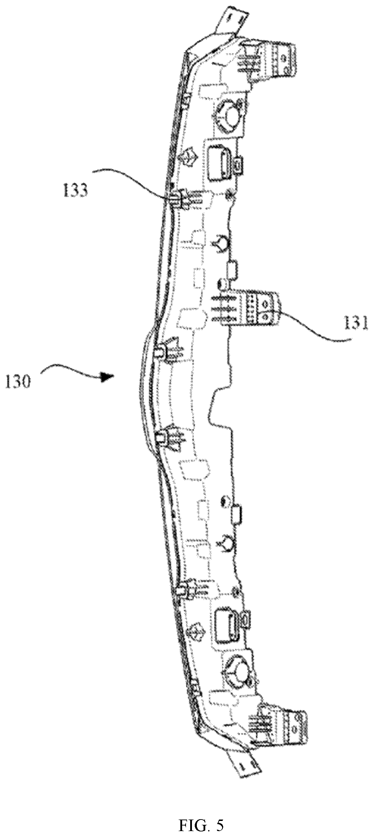

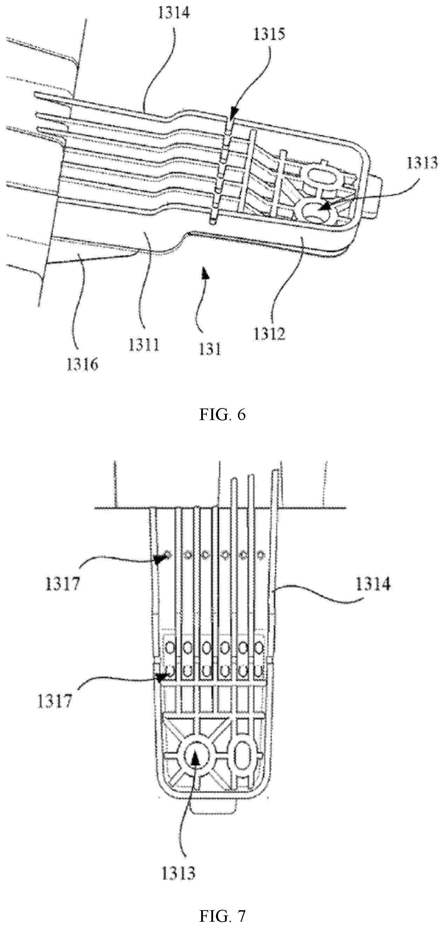

Please refer to FIG. 5, FIG. 6, FIG. 7 and FIG. 8, in an optional exemplary embodiment, the full-width light 130 has a connecting leg 131, and the connecting leg 131 is arranged at an edge of the full-width light 130 and extends along the horizontal direction. The connecting leg 131 is configured to be connected to the frame 210 of the vehicle.

Specifically, it should be noted that in the present embodiment the connecting leg 131 is provided, which is arranged at an edge of the full-width light 130 and extends along the horizontal direction, and is configured to be connected to the frame 210 of the vehicle, so as to facilitate better connection of the full-width light 130 with the frame 210 of the vehicle.

In an optional exemplary embodiment, the connecting leg 131 includes a connecting leg portion 1311 and a connecting end portion 1312. The two ends of the connecting leg portion 1311 are respectively connected to the edge of the full-width light 130 and the connecting end portion 1312. The connecting end portion 1312 is provided with a first mounting hole 1313 for connecting the frame 210 of the vehicle.

It should be noted that the connecting leg 131 is configured to include a connecting leg portion 1311 and a connecting end portion 1312. The two ends of the connecting leg portion 1311 are respectively connected to the edge of the full-width light 130 and the connecting end portion 1312. The connecting end portion 1312 is provided with a first mounting hole 1313 for connecting the frame 210 of the vehicle. During the installation process, a fastener may pass through the first mounting hole 1313 of the connecting end portion 1312 to achieve the connection with the frame 210. Exemplarily, the frame 210 is provided with a threaded hole, and the fastener may be set as a bolt, and the bolt is configured to pass through the first mounting hole 1313 of the connecting end portion 1312 and be threadedly connected to the threaded hole in the frame 210, thereby achieving the connection of the full-width light 130 and the frame 210. This connection method is easy for disassembling and assembling, and is generally applicable, thereby effectively reducing the operation difficulty and at the same time, effectively improving the adaptability of the connection method, and facilitating later maintenance and replacement.

In an optional exemplary embodiment, the connecting leg 131 is provided with a first reinforcing bar 1314, and the first reinforcing bar 1314 is arranged on surfaces of the connecting leg portion 1311 and the connecting end portion 1312.

It should be noted that the first reinforcing bar 1314 is provided on the connecting leg 131, and the first reinforcing bar 1314 is arranged on the surfaces of the connecting leg portion 1311 and the connecting end portion 1312. The provision of the first reinforcing bar 1314 is convenient for enhancing the structural strength of the connecting leg 131, improving the supporting and bearing capacity of the connecting leg 131 in the gravity direction, and further increasing the stability of the connection of the full-width light 130.

In an optional exemplary embodiment, the first reinforcing bar 1314 is provided with a groove 1315 at a position corresponding to the connecting leg portion 1311.

It should be noted that the first reinforcing bar 1314 is provided with a groove 1315 at a position corresponding to the connecting leg portion 1311. The strength of the connecting leg 131 at the position of the groove 1315 can be reduced. If the vehicle collides with a pedestrian, the connecting leg portion 1311 preferentially breaks at the position corresponding to the groove 1315, that is, the connecting leg 131 breaks from the position of the connecting leg portion 1311, so that the full-width light 130 falls off the frame 210, thereby reducing the injury to the pedestrian and further contributing to the protection of pedestrian.

In an optional exemplary embodiment, a reinforcing rib 1316 is further provided at the connection position between the connecting leg portion 1311 and the full-width light 130.

It should be noted that a reinforcing rib 1316 is further provided at the connection position between the connecting leg portion 1311 and the full-width light 130, which can enhance the local strength of the full-width light 130 and thereby improve the supporting and bearing capacity of the full-width light 130 in the direction of gravity.

In an optional exemplary embodiment, the connecting leg 131 is further provided with a weakening hole 1317.

It should be noted that the role of the weakening hole 1317 provided in the connecting leg 131 is to weaken the strength of the connecting leg 131, so that when the full-width light 130 collides with a pedestrian, that is, the connecting leg 131 bears the impact force from the horizontal direction of the full-width light 130, the connecting leg 131 is more easy to be broken. This can greatly reduce the damage to the pedestrian's legs or body, thereby improving the pedestrian protection performance of the vehicle.

In an optional exemplary embodiment, the full-width light 130 is provided with one of a buckle 133 and a slot 114 which cooperate with each other, and the first bracket 110 is provided with the other one of the buckle 133 and the slot 114 which cooperate with each other. During the installation process, the bottom end of the full-width light 130 and the top end of the first bracket 110 are fastened through the buckle 133 and the slot 114, making the installation convenient.

Exemplarily, the full-width light 130 is provided with a buckle 133, and the first bracket 110 is provided with a slot 114 that cooperates with the buckle 133.

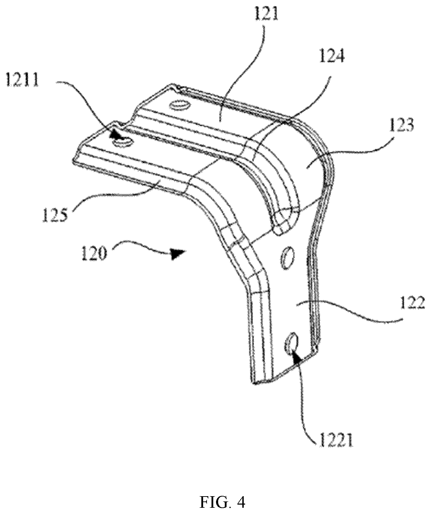

Please refer to FIG. 4, in an optional exemplary embodiment, the second bracket 120 has a first connecting portion 121 and a second connecting portion 122 that are angularly arranged. The first connecting portion 121 and the second connecting portion 122 are connected through an arc-shaped transition portion 123. There are the first connection portion 121 and a second mounting hole 1211 connected to the first bracket 110. The second connecting portion 122 is provided with a third mounting hole 1221 for connecting the frame 210 of the vehicle.

It should be noted that, specifically, in the present embodiment, the second bracket 120 is configured to have a first connecting portion 121 and a second connecting portion 122 that are angularly arranged. The first connecting portion 121 and the second connecting portion 122 are connected through an arc-shaped transition portion 123. The first connection portion 121 is provided with a second mounting hole 1211 connected to the first bracket 110; the second connection portion 122 is provided with a third mounting hole 1221 for connecting the frame 210 of the vehicle. During use, the first connecting portion 121 connects and supports the first bracket 110, and the second connecting portion 122 is used for connecting the frame 210, thereby facilitating achieving the better supporting of the first bracket 110 by the second bracket 120. At the same time, the first connecting portion 121 and the second connecting portion 122 are connected through an arc-shaped transition portion 123. The arc-shaped transition portion 123 can effectively avoid stress concentration and prevent the second bracket 120 from breaking from the connection position between the first connecting portion 121 and the second connecting portion 122.

Specifically, the angle between the first connecting portion 121 and the second connecting portion 122 is 90°. It should be noted that setting the angle between the first connecting portion 121 and the second connecting portion 122 as 90° may achieve the connection of the second connecting portion 122 with the frame 210 along the vertical direction of the second connecting portion 122, and achieve that the first connecting portion 121 provides support perpendicular to the vertical direction for the first bracket 110. This further increase the weight of the full-width light 130 carried by the full-width light assembly 10.

It should be noted that the angle between the first connecting portion 121 and the second connecting portion 122 is not limited to 90° here. In other specific embodiments, the angle between the first connecting portion 121 and the second connecting portion 122 may also be set to other values according to the specific needs of the user. For example, the angle between the first connecting portion 121 and the second connecting portion 122 is set to 75°, 80°, 105°, etc.

Exemplarily, both the second mounting hole 1211 and the third mounting hole 1221 may be configured as holes for bolts to pass through. That is, bolted connection is adopted for the first connecting portion 121 and the second connecting portion 122. For the first connecting portion 121, a bolt is used to pass through the second mounting hole 1211 and thus the first connecting portion 121 is connected with the first bracket 110. For the second connecting portion 122, a bolt is used to pass through the third mounting hole 1221 and thus the second connecting portion 122 is connected with the frame 210.

Exemplarily, a fourth mounting hole 115 corresponding to the second mounting hole 1211 is provided at a central position of the first bracket 110.

In an optional exemplary embodiment, the second bracket 120 further includes a second reinforcing bar 124, and the second reinforcing bar 124 is provided on the first connecting portion 121 and the arc transition section.

It should be noted that, specifically, in the present embodiment, a second reinforcing bar 124 is provided on the first connecting portion 121 and the arc transition section, which can further strengthen the structural stability of the second bracket 120 and effectively improve the bearing capacity of the second bracket 120 for the first bracket 110, thereby increasing the weight carried by the bracket assembly of the full-width light 130.

In an optional exemplary embodiment, the second bracket 120 provides support at a position corresponding to the center of gravity of the first bracket 110. It should be noted that the provision of the second bracket 120 at the position corresponding to the center of gravity of the first bracket 110 is convenient for the second bracket 120 to bear the load of the first bracket 110 in the direction of gravity thereof.

In an optional exemplary embodiment, the first bracket 110 is arranged corresponding to the center of gravity of the full-width light 130. It should be noted that such an arrangement facilitates the full-width light support component 100 composed of the first bracket 110 and the second bracket 120 to better support the full-width light 130.

Exemplarily, the first bracket 110 is a weight balancing component, that is, the second bracket 120 is connected to the center position of the first bracket 110. It should be noted that the arrangement of the second bracket 120 at the center position of the first bracket 110 can effectively support the weight of the full-width light 130, improve the vertical mode of the full-width light 130 and the entire bumper, and avoid the risk of resonance and shaking of the full-width light 130 and bumper during the running of the vehicle.

In an optional exemplary embodiment, each of edges of both sides of the second bracket 120 is provided with a flanging structure 125.

It should be noted that each of edges of both sides of the second bracket 120 is provided with a flanging structure 125, which can effectively increase the load-bearing capacity of the second bracket 120 for the first bracket 110, thereby improving the load-bearing capacity of the bracket assembly of the full-width light 130 in the direction of gravity.

Please continue to refer to FIG. 1, FIG. 9 and FIG. 10. The present application further provides a vehicle, including a frame 210, a bumper assembly 220 and the above-mentioned full-width light assembly 10. A second surface of the first bracket 110 of the full-width light assembly 10 is connected to the bumper assembly 220, and the first bracket 110, the second bracket 120 and the full-width light 130 of the full-width light assembly 10 are all connected to the frame 210.

Since the vehicle provided by the present application includes the above-mentioned full-width light assembly 10, the vehicle also has the above-mentioned technical effects of being beneficial to pedestrian protection, and at the same time, effectively increasing the weight of the full-width light 130 carried by the full-width light assembly 10.

In an optional exemplary embodiment, a lock mounting plate 230 is further included. The lock mounting plate 230 is mounted to the frame 210 and the anti-collision beam. The second bracket 120 is connected to the frame 210 through the lock mounting plate 230, that is, the second bracket 120 is indirectly connected to the frame 210 and is directly connected to the lock mounting plate 230, and the lock mounting plate 230 is directly connected to the frame 210. It should be noted that with such an arrangement, the rigidity of the lock mounting plate 230, the frame 210 and the anti-collision beam can be fully utilized. This greatly improves the mounting stability of the bumper, and at the same time, reduces the horizontal cantilever length of the first bracket 110, improves the load-bearing capacity thereof, and ensures the gap surface difference during assembling. Therefore, the development of the full-width light assembly 10 to miniaturization and lightweight is further promoted, thereby achieving cost reduction and weight reduction effects.

Specifically, the second bracket 120 and the lock mounting plate 230 are connected by bolts.

Specifically, the top end of the frame 210 is provided with a first mounting position 211 for mounting the full-width light 130. Specifically, the first mounting position 211 may be a threaded hole, which is convenient for a bolt to pass through the first mounting hole 1313 on the connecting leg 131 of the full-width light 130 and to be connected to the first mounting position 211. The frame 210 is further provided with a second mounting position 213 for connecting the first bracket 110, and the second mounting position 213 may be a lug boss having a threaded hole to facilitate supporting and connecting the bracket leg 113 on the first bracket 110.

Finally, it should be noted that the above embodiments are merely intended for describing the technical solutions of the present application other than limiting them. Although the present application has been described in detail with reference to the aforementioned embodiments, it should be understood by persons skilled in the art that the technical solutions recorded in the aforementioned embodiments may still be modified or some or all of the technical features of the technical solutions may be equivalently substituted; while these modifications or substitutions do not make the essence of the corresponding technical solutions depart from the scope of the technical solutions of various embodiments of the present application.

In addition, it should be noted that the specific technical features described in the above-mentioned specific embodiments may be combined in any suitable manner without contradiction. In order to avoid unnecessary repetition, various possible ways of combination are not separately described in the present application.

## Claims

1. A full-width light assembly, comprising a full-width light support component and a full-width light, wherein the full-width light support component is configured to support the full-width light and to be connected to a frame of a vehicle and a bumper assembly of the vehicle;
the full-width light support component comprises a first bracket and a second bracket, and both of the first bracket and the second bracket are configured to be connected to the frame of the vehicle, wherein the second bracket supports the first bracket;
the first bracket is of a sheet-like structure, having a first surface and a second surface that are oppositely arranged, and the first surface is configured to cover the full-width light and the second surface is configured to be connected to the bumper assembly.

2. The full-width light assembly according to claim 1, wherein the first bracket is provided with an opening, and the opening is arranged at a center position of the first bracket.

3. The full-width light assembly according to claim 2, wherein the first bracket is provided with a plurality of weight-reducing holes.

4. The full-width light assembly according to any one of claims 1 to 3, wherein the full-width light has a connecting leg, and the connecting leg is arranged at an edge of the full-width light and extends along a horizontal direction, and the connecting leg is configured to be connected to the frame of the vehicle.

5. The full-width light assembly according claim 4, wherein the connecting leg comprises a connecting leg portion and a connecting end portion, and two ends of the connecting leg portion are respectively connected to the edge of the full-width light and the connecting end portion, and the connecting end portion is provided with a first mounting hole for connecting the frame of the vehicle.

6. The full-width light assembly according to claim 5, wherein the connecting leg is provided with a first reinforcing bar, and the first reinforcing bar is arranged on surfaces of the connecting leg portion and the connecting end portion.

7. The full-width light assembly according to claim 6, wherein the first reinforcing bar is provided with a groove at a position corresponding to the connecting leg portion.

8. The full-width light assembly according to any one of claims 1 to 3, wherein the second bracket is provided with a first connecting portion and a second connecting portion which are angularly arranged, and the first connecting portion and the second connecting portion are connected through an arc-shaped transition portion;
the first connecting portion is provided with a second mounting hole for connecting the first bracket;
the second connecting portion is provided with a third mounting hole for connecting the frame of the vehicle.

9. The full-width light assembly according to claim 8, wherein the second bracket further has a second reinforcing bar, and the second reinforcing bar is arranged at the first connecting portion and the arc transition section.

10. A vehicle, comprising: a frame, a bumper assembly and the full-width light assembly according to any one of claims 1 to 9;
the second surface of the first bracket of the full-width light assembly is connected to the bumper assembly, and the first bracket, the second bracket and the full-width light of the full-width light assembly are all connected to the frame.
